# EUROPÄISCHE PATENTANMELDUNG

(11) **EP 3 793 161 A1**
(43) Veröffentlichungstag der Anmeldung: **17.03.2021**
(21) Anmeldenummer: 19196972.4
(22) Anmeldetag: 12.09.2019
(51) Int. Cl.: H04L 29/06, G05B 19/418

(54) **VERFAHREN ZUR PROJEKTIERUNG UND ANSCHLIESSENDEN BETRIEB VON FUNKTIONAL SICHEREN VERBINDUNGEN**

(71) Anmelder: Siemens Aktiengesellschaft, 80333 München (DE)
(72) Erfinder: Jartyn, Hermann, 91338 Igensdorf (DE)

(57) **Zusammenfassung**

Um eine sichere Verbindung über Maschinengrenzen hinweg zu gewährleisten, wird vorgeschlagen in einer Hochlauf-Phase (ST), eine dynamische Projektierung durchzuführen, zusätzlich zum Verbindungsdatensatz (30) des Engineering-Zeitpunkts (ET) wird ein Identifikator (ID) aus einem eindeutigen Merkmal des ersten Teilnehmers (1) gebildet, und anschließend wird der Identifikator (ID) mit einem Konfigurations-Telegramm (KT) an die weiteren Teilnehmer (2,3,4) versendet, diese speichern den Identifikator (ID) lokal ab, wobei in einem dritten Zeitbereich (III) eine Kommunikation durchgeführt wird, und
- beim Aussenden von Telegrammen (FT) über die Kommunikationsverbindung (21) wird den Telegrammen (FT) der Identifikator (ID) hinzugefügt, und
- beim Empfangen der Telegramme (FT) wird der Identifikator (ID) aus dem Telegramm (FT) extrahiert und es wird geprüft, ob der extrahierte Identifikator (ID) mit dem lokal abgespeicherten Identifikator (ID) übereinstimmt,
- wenn keine Übereinstimmung vorliegt wird eine Sicherheitsfunktion ausgelöst.

## Beschreibung

Die Erfindung betrifft ein Verfahren zur Projektierung und anschließenden Betrieb eines Netzwerkes für eine funktional sichere Verbindungsidentifizierung zwischen zumindest zwei Teilnehmern in einem Kommunikationssystem, wobei für eine Kommunikationsverbindung zwischen einem ersten Teilnehmer und einem weiteren Teilnehmer ein Verbindungsdatensatz projektiert wird, welcher eine Quell-Adresse des ersten Teilnehmers und eine Ziel-Adresse des jeweils weiteren Teilnehmers enthält, wobei dieser Verbindungsdatensatz in einer Engineering-Phase erzeugt wird, welcher einen ersten Zeitbereich bildet, in dem eine statische Projektierung durchgeführt wird.

Im Sinne der Erfindung wird unter funktionaler Sicherheit die Definition gemäß der Norm IEC 61508 verstanden.

Bisher wurde durch technische oder organisatorische Maßnahmen sichergestellt, dass bei einer sicheren Verbindungsidentifizierung zwischen zwei Kommunikationsteilnehmern in einem Kommunikationssystem ein Telegramm, ein lokales Netz des Kommunikationssystems nicht verlassen kann. Innerhalb des lokalen Netzes des Kommunikationssystems wurden dazu Adresskennungen eindeutig vergeben. In einem anderen Anwendungsfall für Serienmaschinen müssen im Kommunikationsnetz zwischen zwei Serienmaschinen Netztrenner installiert werden, die dafür sorgen, dass die Telegramme das lokale Netz nicht verlassen können.

Im Sinne der Erfindung ist unter einer Serienmaschine eine Maschine, z.B. Werkzeugwechsler, in einer modularen Bauweise zu verstehen. Bei diesen Maschinen können gleiche Komponenten und gleiche Adressen sowie Namensraumvergabe vorhanden sein. In einem Anlagen-Betrieb kann es daher vorkommen, dass zwei Serienmaschinen gleichen Typ eingesetzt werden und zudem noch über ein Netzwerk gekoppelt sein.

Die Systembeschreibung "Profisafe Systembeschreibung, Technologie und Anwendung", Version November 2010, Bestellnummer 4.3.4.1, Herausgeber Profibusnutzerorganisation e.V. beschreibt die Realisierung einer sicherheitsgerichteten Kommunikation und insbesondere einer sicheren Verbindungsidentifizierung bei Profibus- und Profinet-Protokollen.

Bei den bekannten Verfahren zur sicherheitsgerichteten Kommunikation, insbesondere in der Automatisierungstechnik, muss eine Adressbeziehung, umfassend eine Ziel- und eine Quell-adresse, beispielsweise von Profinet-Teilnehmern, netzweit eindeutig sein.

Als Beispiel sei das Sicherheitsprotokoll Profisafe genannt. Bei Profisafe wird ein 32 Bit Codename, welcher einer Adressbeziehung entspricht, zur eindeutigen Verbindungsidentifizierung genutzt. Die Codenamen können nicht weltweit eindeutig vergeben werden. Ein Profisafe-Sicherheitsprotokoll über ein WAN (White Area Network) mit RT Class UDP kann daher derzeit nicht realisiert werden. Im Sinne der Erfindung ist unter RT Class UDP, beispielsweise eine Profinet Realtime Communication, wie sie das UDP (User Datagram Protocol gemäß IEEE 802.3 nutzt, zu verstehen.

Es ist daher eine Aufgabe der Erfindung, eine funktional sicherheitsgerichtete Kommunikations-Adress-Sicherung bereitzustellen, die auch dann Sicherheit gewährleistet, wenn die Adressen im gesamten Netzwerk nicht eindeutig vergeben werden können.

Die der Erfindung zugrunde liegende Aufgabe wird dadurch gelöst, dass bei einem Verfahren zur Projektierung und anschließendem Betrieb eines Netzwerkes für eine funktional sichere Verbindungsidentifizierung zwischen zumindest zwei Teilnehmern in einem Kommunikationssystem, wobei für eine Kommunikationsverbindung zwischen einem ersten Teilnehmer und einem weiteren Teilnehmer ein Verbindungsdatensatz projektiert wird, welcher eine Quell-Adresse des ersten Teilnehmers und eine Ziel-Adresse des jeweils weiteren Teilnehmers enthält, wobei dieser Verbindungsdatensatz in einer Engineering-Phase erzeugt wird, welcher einen ersten Zeitbereich bildet, in dem eine statische Projektierung durchgeführt wird, dass bei der Projektierung von derartigen Anlagen eine Entkopplung von einem Engineering und einem Runtime durchgeführt wird, in einer Hochlauf-Phase, welche einen zweiten Zeitbereich bildet, in dem eine dynamische Projektierung durchgeführt wird und die Teilnehmer in diesem für eine anschließende Kommunikation hochlaufen, wird zusätzlich zum Verbindungsdatensatz des Engineering-Zeitpunktes ein Identifikator aus einem eindeutigen Merkmal des Teilnehmers gebildet, und anschließend wird der Identifikator mit einem Konfigurations-Telegramm an die weiteren Teilnehmer versendet, diese speichern den Identifikator lokal ab, wobei in einem dritten Zeitbereich eine Kommunikation durchgeführt wird, und beim Aussenden von Telegrammen über die Kommunikationsverbindung wird den Telegrammen der Identifikator hinzugefügt, und beim Empfangen der Telegramme wird der Identifikator aus dem Telegramm extrahiert und es wird geprüft, ob der extrahierte Identifikator mit dem lokal abgespeicherten Identifikator übereinstimmt, wenn keine Übereinstimmung vorliegt, wird eine Sicherheitsfunktion ausgelöst.

Das erfindungsgemäße Verfahren sieht vor, dynamisch eine Identifikation den bisher bekannten F-Adressen hinzu zu fügen. Der hinzu gefügte Identifikator wird an alle Teilnehmer, insbesondere an deren F-Treiber (lokal/dezentral), mittels eines Konfigurations-Telegramms verteilt. Wenn ein Teilnehmer über seinen jeweiligen F-Treiber ein Telegramm, insbesondere ein F-Telegramm, empfängt, kann er aus den empfangenen F-Telegramm den Identifikator herausfiltern und mit dem lokal gespeicherten Identifikator vergleichen. Stimmen die Identifikatoren überein, können weitere Überprüfungen für das F-Telegramm erfolgen.

Von weiterem Vorteil wird für das Verfahren angesehen, wenn der erste Teilnehmer ein den weiteren Teilnehmern übergeordnetes steuerndes Automatisierungsgerät ist und das eindeutige Merkmal eine MAC-Adresse des übergeordneten steuernden Automatisierungsgerätes ist. Eine CPU, insbesondere eine F-CPU, verfügt in der Regel über zumindest eine MAC-Adresse. Daraufhin kann die MAC-Adresse stellvertretend für die F-CPU als Identifikator ausgewählt werden, dadurch wird allgemein eine Komplexität verringert und der Identifikator der CPU kann für alle anderen Peripheriesysteme innerhalb einer Serienmaschine verwendet werden.

Unter MAC-Adresse ist eine Hardware-Adresse jedes einzelnen Netzwerkadapters, die als eindeutiger Identifikator des Gerätes in einem Rechnernetz dient, zu verstehen.

Weiterhin ist es von Vorteil, wenn der Identifikator im ersten Teilnehmer verschlüsselt wird.

Mit Vorteil verwendet man das Verfahren zum Einsatz bei einer auf funktional sichere Kommunikation ausgelegten Serienmaschinen mit zumindest zwei Teilnehmern an, die Serienmaschinen sind dabei nahezu identisch aufgebaut, und die Serienmaschinen sind über ein erstes Netzwerk der ersten Serienmaschine mit einem zweiten Netzwerk der zweiten Serienmaschine über einen Switch gekoppelt.

Wenn nun in Serienmaschinen mit identischen Programmen und damit mit identischen Verbindungsdatensätzen für jede Maschine der Serie bzw. für ihre Verbindungsdatensätze jeweils von einer CPU der einzelnen Serienmaschine, die MAC-Adresse als Identifikator genommen wird, ist das ausreichend, um weltweit sicher zu adressieren. Zuvor wurden bei Serienmaschinen zwischen den Kommunikationsnetzen Netztrenner installiert, die dafür sorgen, dass beispielsweise die Profisafe-Telegramme das lokale Netz der Serienmaschine nicht verlassen können.

In der Zeichnung wird ein Ausführungsbeispiel der Erfindung vorgestellt. Es zeigt
- FIG 1: ein Kommunikationssystem mit einer ersten und zweiten Kommunikationsverbindung,
- FIG 2: einen zeitlichen Ablauf von statischer und dynamischer Projektierung, bzw. eine statische Projektierung in einer Engineering-Phase und einer dynamischen Projektierung in einer Runtime-Phase und
- FIG 3: eine erste Serienmaschine gekoppelt mit einer zweiten Serienmaschine.

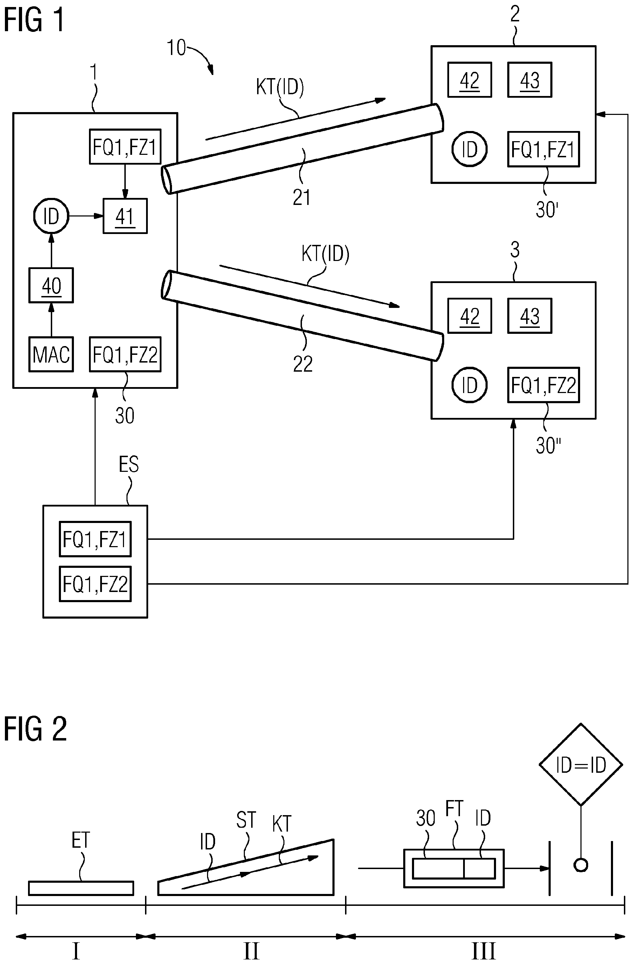

Gemäß FIG 1 ist ein Kommunikationssystem 10 mit einem ersten Teilnehmer 1, einem zweiten Teilnehmer 2 und einem dritten Teilnehmer 3 dargestellt. Der erste Teilnehmer 1 hat eine erste Kommunikationsverbindung 21 mit dem zweiten Teilnehmer 2 und der erste Teilnehmer 1 hat zusätzlich eine zweite Kommunikationsverbindung 22 mit dem dritten Teilnehmer 3. Die Kommunikationsverbindungen 21,22 wurden zuvor mit einer Engineering-Station ES statisch parametriert, dazu wurden den Teilnehmern 1,2,3 jeweils die für ihre Verbindung notwendigen Verbindungsdatensätze 30 mitgeteilt. Ein Verbindungsdatensatz 30 enthält eine Quell-Adresse FQ1, eine erste Ziel-Adresse FZ1 und eine weitere zweite Ziel-Adresse FZ2. Die Quell-Adresse FQ1 ist als Quelle dem ersten Teilnehmer 1 zugeordnet, die erste Ziel-Adresse FZ1 ist als Ziel den zweiten Teilnehmer 2 zugeordnet und die weitere zweite Ziel-Adresse FZ2 ist als Ziel dem dritten Teilnehmer 3 zugeordnet.

Die Projektierung der Verbindungsdatensätze 30 mit den jeweiligen Quell-Adressen FQ1 und den Ziel-Adressen FZ2,FZ3 wurde in einem ersten Zeit-Bereich I in einer Engineering-Phase ET erzeugt. Der Engineering-Phase ET folgt in einem zweiten Zei-Bereich II eine Hochlauf-Phase ST (siehe FIG 2).

Mit FIG 1 werden in der Hochlauf-Phase ST Konfigurations-Telegramme KT von dem ersten Teilnehmer 1 an die weiteren Teilnehmer 2,3 versendet. Die Konfigurations-Telegramme KT enthalten einen Identifikator ID und der Identifikator ID wurde zuvor erfindungsgemäß dynamisch während der Hochlauf-Phase ST aus einem eindeutigen Merkmal des ersten Teilnehmers 1 gebildet und anschließend wird dieser Identifikator ID mit dem Konfigurations-Telegramm KT an die Teilnehmer 2,3 versendet. Das eindeutige Merkmal des ersten Teilnehmers 1, welcher als eine übergeordnete F-CPU ausgestaltet ist, ist seine MAC-Adresse MAC. Über ein Verschlüsselungsmittel 40 wird die MAC-Adresse MAC in den Identifikator ID verschlüsselt. Der Identifikator ID wird zu einem Aufbereitungsmittel 41 weitergeleitet, und das Aufbereitungsmittel 41 ist ausgestaltet, zu dem Verbindungsdatensatz 30 für die erste Kommunikationsverbindung 21 der Quell-Adresse FQ1 und der ersten Ziel-Adresse FZ1 diesem Identifikator ID hinzu zu fügen. Nun wird ein zu sendendes Telegramm FT (F-Telegramm) zwischen dem ersten Teilnehmer 1 und dem zweiten Teilnehmer 2 den eindeutigen Identifikator ID enthalten, kommt nun ein Telegramm FT (F-Telegramm) an dem zweiten Teilnehmer 2 an, wird der Identifikator ID in dem zweiten Teilnehmer 2 aus dem Telegramm FT extrahiert und es wird geprüft, ob der extrahierte Identifikator ID mit dem lokal abgespeicherten Identifikator ID übereinstimmt, wenn keine Übereinstimmung vorliegt, wird eine Sicherheitsfunktion ausgelöst.

FIG 2 zeigt die Aufteilung der statischen und dynamischen Projektierung in drei Zeitbereiche. In dem ersten Zeitbereich I wird während einer Engineering-Phase ET der grundsätzliche Verbindungsdatensatz 30 mit Quell-Zieladressen FQ1,FZ1 erstellt. In einem zweiten Zeitbereich II wird während einer Hochlauf-Phase ST der Identifikator ID erstellt und mittels Konfigurations-Telegrammen KT an die entsprechenden Teilnehmer 2,3 versendet. In einem dritten Zeitbereich III wird beim Aussenden der Telegramme FT (F-Telegramme) dem Verbindungsdatensatz 30 der Identifikator ID hinzugefügt. Kommt dieses Telegramm FT beim Empfänger (Teilnehmer 2) an, so wird im Empfänger geprüft, ob der in dem Telegramm FT enthaltene Identifikator ID auch zuvor in dem Empfänger, sprich in dem Teilnehmer 2,3, abgespeichert wurde.

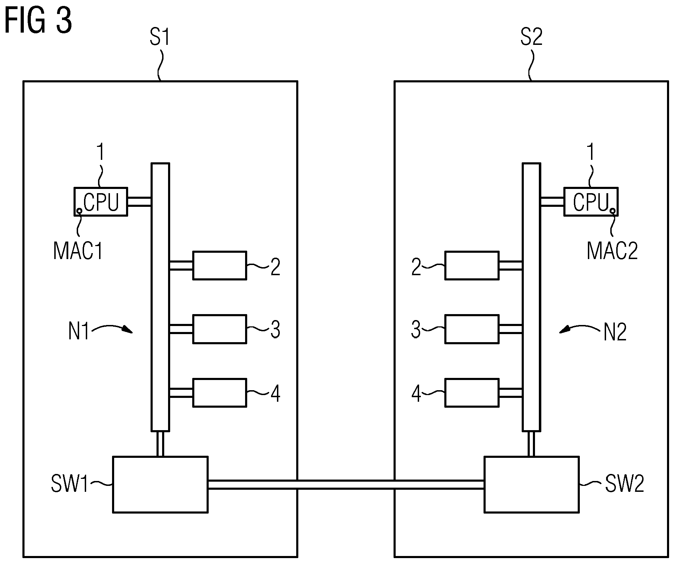

Gemäß FIG 3 sind nun zwei baugleiche Serienmaschinen S1,S2 dargestellt. Diese Serienmaschinen S1,S2 können beispielsweise in einem Industriebetrieb zwei Werkzeugwechsler für zwei unterschiedliche Werkzeugmaschinen darstellen. Dennoch sind die Serienmaschinen S1,S2 modular identisch aufgebaut, sie unterscheiden sich nur anhand unterschiedlicher Programme. Es kann aber auch durchaus sein, dass die Adress- und Namens-Vergabe in den Serienmaschinen S1,S2 identisch ist. Die erste Serienmaschine S1 weist ein erstes Netzwerk N1 auf und die zweite Serienmaschine S2 weist ein zweites Netzwerk N2 auf. Die beiden Netzwerke N1,N2 sind jeweils über einen ersten Switch SW1 und einem zweiten Switch SW2 gekoppelt. Da nun aber der Teilnehmer 1 ausgestaltet ist, als eine F-CPU mit einer ersten MAC-Adresse MAC1 und der erste Teilnehmer 1 im zweiten Netzwerk N2 ist ausgestaltet, als eine F-CPU mit einer zweiten MAC-Adresse MAC2, kann durch das verfahrensgemäße Hinzufügen des aus den MAC-Adressen generierten Identifikatoren ID eine sichere Adressierung auch über verbundene Serienmaschinen S1,S2 gewährleistet werden.

## Patentansprüche

1. Verfahren zur Projektierung und anschließenden Betrieb eines Netzwerkes (N1,N2) für eine funktional sichere Verbindungsidentifizierung zwischen zumindest zwei Teilnehmern (1,2) in einem Kommunikationssystem (10), wobei für eine Kommunikationsverbindung (21) zwischen einem ersten Teilnehmer (1) und einem weiteren Teilnehmer (2,3,4) ein Verbindungsdatensatz (30) projektiert wird, welcher eine Quell-Adresse (FQ1) des ersten Teilnehmers (1) und eine Ziel-Adresse (FZ2,FZ3,FZ3) des jeweils weiteren Teilnehmers (2,3,4) enthält, wobei dieser Verbindungsdatensatz (30) in einer Engineering-Phase (ET) erzeugt wird, welche einen ersten Zeitbereich (I) bildet in dem eine statische Projektierung durchgeführt wird,
**dadurch gekennzeichnet,**
**dass** in einer Hochlauf-Phase (ST), welche einen zweiten Zeitbereich (II) bildet in dem eine dynamische Projektierung durchgeführt wird und die Teilnehmer in diesem für eine anschließende Kommunikation hochlaufen, zusätzlich zum Verbindungsdatensatz (30) des Engineering-Zeitpunkts (ET) ein Identifikator (ID) aus einem eindeutigen Merkmal des ersten Teilnehmers (1) gebildet wird, und anschließend wird der Identifikator (ID) mit einem Konfigurations-Telegramm (KT) an die weiteren Teilnehmer (2,3,4) versendet, diese speichern den Identifikator (ID) lokal ab, wobei in einem dritten Zeitbereich (III) eine Kommunikation durchgeführt wird, und
- beim Aussenden von Telegrammen (FT) über die Kommunikationsverbindung (21) wird den Telegrammen (FT) der Identifikator (ID) hinzugefügt, und
- beim Empfangen der Telegramme (FT) wird der Identifikator (ID) aus dem Telegramm (FT) extrahiert und es wird geprüft, ob der extrahierte Identifikator (ID) mit dem lokal abgespeicherten Identifikator (ID) übereinstimmt,
- wenn keine Übereinstimmung vorliegt wird eine Sicherheitsfunktion ausgelöst.

2. Verfahren nach Anspruch 1, wobei der erste Teilnehmer (1) ein den weiteren Teilnehmern (2,3,4) übergeordnetes steuerndes Automatisierungsgerät (CPU) ist und das eindeutige Merkmal eine MAC-Adresse des übergeordneten steuernden Automatisierungsgeräts (CPU) ist.

3. Verfahren nach Anspruch 1 oder 2, wobei der Identifikator (ID) im ersten Teilnehmer (1) verschlüsselt wird.

4. Verfahren nach einem der Ansprüche 1 bis 3, zum Einsatz bei einer auf funktional sichere Kommunikation ausgelegten Serienmaschine (S1,S2) mit den zumindest zwei Teilnehmern (1,2), welche nahezu identisch aufgebaut sind, bei welchen ein erstes Netzwerk (N1) einer ersten Serienmaschine (S1) mit einem zweiten Netzwerk (N2) einer zweiten Serienmaschine (S2) über einen Switch (SW1,SW2) gekoppelt sind.
